Europäisches Patentamt

European Patent Office

Office européen des brevets

(11) Numéro de publication: **0 493 143 B1**

(12) **FASCICULE DE BREVET EUROPEEN**

(45) Date de publication de fascicule du brevet: **25.01.95** (51) Int. Cl.⁶: **B64G 1/24**, G05D 1/08

(21) Numéro de dépôt: **91403128.1**

(22) Date de dépôt: **20.11.91**

(54) **Système de contrôle d'attitude pour satellite stabilisé 3-axes, notamment pour satellite d'observation.**

(30) Priorité: **21.12.90 FR 9016150**

(43) Date de publication de la demande:
**01.07.92 Bulletin 92/27**

(45) Mention de la délivrance du brevet:
**25.01.95 Bulletin 95/04**

(84) Etats contractants désignés:
**DE ES GB IT NL SE**

(56) Documents cités:
**EP-A- 0 363 243**
**US-A- 4 010 921**
**US-A- 4 521 855**

**JOURNAL OF GUIDANCE AND CONTROL vol. 9, no. 1, Février 1986, NEW YORK (USA)pages 108 - 112; L. MUHLFELDER: 'EVOLUTION OF AN ATTITUDE CONTROL SYSTEM FORBODY-STABILIZED COMMUNICATION SPACECRAFT'**

(73) Titulaire: **AEROSPATIALE Société Nationale Industrielle**
**37, Boulevard de Montmorency**
**F-75781 Paris Cédex 16 (FR)**

(72) Inventeur: **Blancke, Bernard**
**16 chemin des Lauriers**
**F-06110 Le Cannet (FR)**
Inventeur: **Attanasio, Marc**
**1015 chemin de Jylloue**
**F-06250 Mougins (FR)**
Inventeur: **Maute, Patrick**
**10 chemin de Cambarnier Nord**
**F-06560 Valbonne (FR)**
Inventeur: **Achkar, Issam-Maurice**
**10 rue du Bosquet**
**F-06150 Cannes-la-Bocca (FR)**

(74) Mandataire: **Rinuy, Santarelli**
**14, avenue de la Grande Armée**
**F-75017 Paris (FR)**

EP 0 493 143 B1

## Description

L'invention concerne la stabilisation en attitude d'un satellite (ou plus généralement d'une plate-forme spatiale portant une charge utile) décrivant une orbite terrestre, en pratique circulaire, de préférence géostationnaire.

Les satellites géostationnaires stabilisés selon trois axes sont actuellement, de façon quasi-exclusive, des satellites de télécommunications, pour lesquels le pointage en lacet et la stabilité vis a vis de vibrations à haute fréquence ne sont pas des critères critiques.

Ces satellites ont en pratique à bord des roues cinétiques leur conférant une rigidité gyroscopique suffisante pour limiter les dérives en lacet (c'est le cas notamment des satellites ARABSAT, EUTELSAT-2, TVSAT-2).

On peut citer à ce propos le document US-A-4.521.855 concernant le contrôle d'un satellite en roulis-lacet qui vise à se passer de toute détection de l'attitude en lacet. Un satellite selon ce document comporte un moment cinétique embarqué ayant une composante majoritaire en tangage et une composante en lacet. L'attitude en lacet est estimée en tirant profit de ce qu'une erreur en lacet devient finalement une erreur en roulis du fait de la raideur en lacet du satellite. Une boucle rapide corrige les erreurs en roulis par action sur les roues tandis qu'une boucle lente corrige les erreurs en lacet et désature le moment cinétique en lacet à l'aide d'une bobine magnétique en lacet.

Un tel principe de contrôle d'attitude s'avère toutefois insuffisamment précis dans le cas de satellites d'observation en météorologie notamment pour lesquels la précision d'attitude est un paramètre critique ; une telle précision est de même recherchée, sans avoir non plus eu encore de solution satisfaisante, dans le cas par exemple de plates-formes expérimentales.

Il est rappelé ici que, de manière schématique, les satellites de télécommunications doivent satisfaire en priorité à un critère de rentabilité, donc correspondre en fait à un faible coût, tandis que les satellites d'observation ou les satellites "expérimentaux" doivent répondre en fait à un critère de performance quel que soit le coût que cela peut impliquer.

Plus précisément, la solution précitée à stabilisation par roues cinétiques a notamment pour inconvénients de générer des vibrations importantes, tandis que le contrôle gyroscopique du lacet qu'elle permet, étant de type passif, est nécessairement imprécis.

On connaît également, d'après le document US-A-4.010.921, un contrôle d'attitude en roulis-lacet et tangage d'un satellite à l'aide de roues à reaction. Lorsque cela est nécessaire et lorsque le satellite se trouve dans une zone appropriée de l'espace, une désaturation des roues est commandée à l'aide d'un dipôle magnétique en tangage pour la désaturation en roulis-lacet, et d'un dipôle magnétique en roulis pour la désaturation en tangage. Les performances d'une telle solution sont insuffisantes pour des satellites d'observation ou des satellites expérimentaux.

L'invention vise à permettre un contrôle d'attitude de grande précision dans le cas de satellite ou de plate-forme géostationnaire stabilisé(e) trois axes :
- de type actif, quoique de grande fiabilité,
- minimisant les interventions de tuyères en améliorant ainsi la stabilité de la plate-forme,
- minimisant les régimes transitoires de contrôle d'orbite,
- facilitant les opérations de retournement saisonnier,
- permettant une compensation a priori des perturbations internes sur les trois axes, et
- minimisant les problèmes de résonance à bord.

L'invention propose à cet effet un dispositif de contrôle d'attitude d'un satellite stabilisé selon trois axes sur une orbite terrestre, comportant :
- un ensemble de détection d'attitude adapté à délivrer des signaux d'attitude en roulis, en lacet et en tangage,
- un jeu d'au moins trois roues à réaction d'axes non parallèles,
- un jeu d'au moins deux bobines magnétiques orientées au moins approximativement selon deux directions non parallèles du plan roulis/lacet,
- une boucle de contrôle primaire comportant un circuit de traitement et de régulation connecté entre l'ensemble de détection d'attitude et le jeu d'au moins trois roues à réaction et adapté à déterminer à partir des signaux d'attitude et de consignes d'attitude, des signaux de correction d'attitude destinés aux roues pour appliquer au satellite des couples primaires de correction d'attitude,
- une boucle de contrôle secondaire comportant un circuit de régulation de bobines connecté entre le circuit de traitement et de régulation, le jeu d'au moins trois roues à réaction et le jeu d'au moins deux bobines magnétiques, et adapté à déterminer à partir des signaux de correction d'attitude destinés aux roues, et de signaux représentatifs du comportement des roues, des signaux de compensation destinés à être appliqués aux bobines magnétiques pour, par interaction avec le champ magnétique terrestre, appliquer au satellite des couples secondaires de correction d'attitude et de désaturation des roues,

- un actionneur en tangage,
- un circuit de désaturation en tangage du jeu d'au moins trois roues connecté entre ce jeu d'au moins trois roues à réaction et cet actionneur en tangage.

Selon des dispositions préférées :

- les signaux représentatifs du comportement des roues sont des signaux de vitesse délivrés par des tachymètres associés à chacune des roues,
- l'ensemble de détection d'attitude comporte un détecteur terrestre et un détecteur d'Etoile polaire,
- le jeu d'au moins trois roues à réaction comporte une roue à réaction alignée suivant l'axe de tangage et deux roues d'axes parallèles au plan roulis/lacet,
- les deux roues d'axes parallèles au plan roulis/lacet sont respectivement alignées selon les axes de roulis et de lacet,
- le jeu d'au moins trois roues à réaction comporte au moins une quatrième roue,
- la quatrième roue est alignée selon la bissectrice du trièdre formé par les axes des trois autres roues à réaction,
- les deux bobines magnétiques sont orientées respectivement selon les axes de roulis et de lacet,
- le circuit de traitement et de régulation est du type proportionnel-intégral,
- la boucle de contrôle primaire se décompose en trois circuits de contrôle respectivement spécifique de chacune desdites trois roues à réaction,
- la boucle de contrôle secondaire reçoit des signaux de consigne de comportement de roues et est adaptée à appliquer aux bobines des signaux propres à générer des couples secondaires de correction d'attitude tout en maintenant le comportement des roues à l'intérieur d'une plage prédéterminée autour desdits signaux de consigne.

On notera que l'invention propose ainsi de combiner sur un satellite décrivant une orbite géostationnaire, pour son contrôle d'attitude sur trois axes, des roues à réaction (donc un ensemble de roues à moment cinétique en moyenne nul), un détecteur terrestre, un détecteur d'étoile polaire et des bobines magnétiques, laquelle combinaison permet de satisfaire aux objectifs précités.

Des objets, caractéristiques et avantages de l'invention ressortent de la description qui suit, donnée à titre d'exemple non limitatif, en regard des dessins annexés sur lesquels :

- la figure 1 est une vue de principe d'un satellite équipé d'un système de contrôle d'attitude conforme à l'invention,
- la figure 2 est un diagramme fonctionnel de ce système en mode normal de fonctionnement,
- la figure 3 est un diagramme fonctionnel détaillant la boucle de contrôle primaire du système de contrôle,
- la figure 4 est un diagramme fonctionnel du système de contrôle de la figure 2, détaillant la boucle de contrôle secondaire de ce système,
- les figures 5A à 5D présentent graphiquement des mesures obtenues par simulation du fonctionnement de la boucle primaire,
- les figures 6A à 6D présentent graphiquement des mesures obtenues par simulation du fonctionnement de la boucle secondaire dans le cas d'un orage magnétique, et
- les figures 7A à 7G présentent graphiquement des mesures obtenues par simulation d'un retournement saisonnier autour de l'axe de lacet.

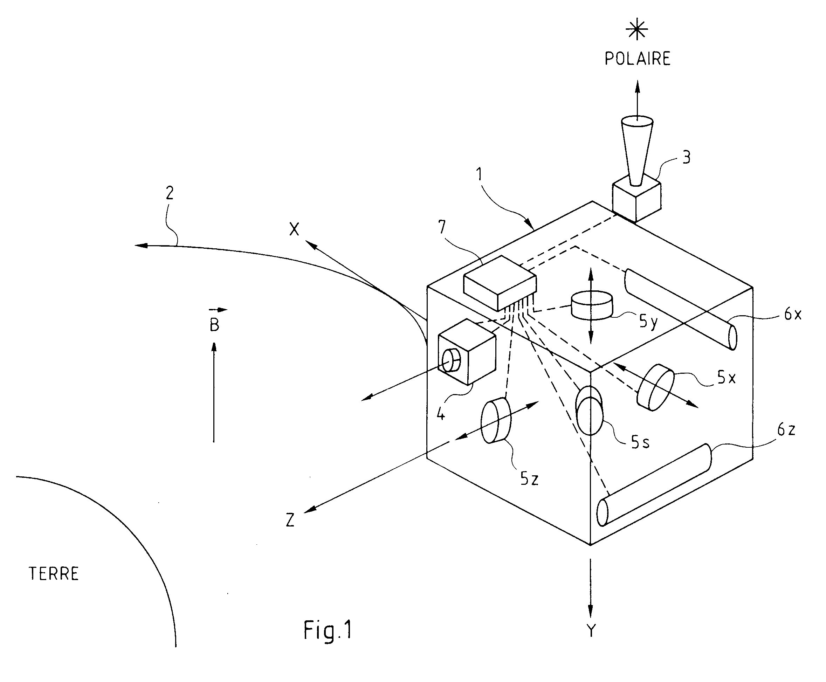

A la figure 1 est représenté un satellite dont la plate-forme est schématisée en 1, décrivant une orbite 2 autour de la TERRE. Ce satellite est de manière connue muni de divers équipements non représentés (générateurs, antennes ...) qui, ne faisant pas partie de l'invention, ne seront pas décrits ici.

Ainsi qu'on le sait, à ce satellite est associé un axe X appelé axe de roulis, tangent à l'orbite 2, un axe Y appelé axe de tangage, parallèle à l'axe NORD-SUD de la TERRE et dirigé vers le SUD et un axe Z, appelé axe de lacet, dirigé vers la TERRE. Ces trois axes forment un trièdre direct.

Pour des raisons de lisibilité sur cette figure 1, ne sont représentés que les principaux éléments intervenant dans le contrôle d'attitude prévu par l'invention.

Ce système de contrôle d'attitude selon les trois axes comprend :

- un ensemble de détection d'attitude selon les trois axes dont les éléments sont : un détecteur d'étoile polaire 3 situé sur la face NORD du satellite (avec éventuellement un deuxième détecteur similaire sur la face SUD pour les missions prévoyant des retournements NORD/SUD du satellite), pour la détection des angles de lacet et de roulis et un détecteur terrestre infrarouge 4 sur la face TERRE pour la détection des angles de roulis et tangage ;
- un ensemble de contrôle primaire d'attitude constitué de trois roues à réaction 5X, 5Y et 5Z adaptés à délivrer des couples en roulis, tangage et lacet, pour le pointage direct de la plate-forme ; une quatrième roue 5S est avantageusement prévue, ici placée le long de la bissectrice du trièdre pour la redondance,

- un ensemble de contrôle secondaire d'attitude constitué de deux bobines 6Z et 6X situées dans le plan roulis-lacet, ici alignés sur les axes Z et Y, adaptées à délivrer des couples en roulis et lacet par interaction avec le champ magnétique terrestre $\vec{B}$, prévu pour la compensation à long terme des couples perturbateurs externes (principalement couples solaires en orbite géostationnaire),
- un étage de traitement et de commande, noté 7, constitué d'un calculateur (analogique ou digital) générant, à partir principalement des sorties de l'ensemble de détection, des signaux de commande vers les ensembles de contrôle.

Cette configuration possède de nombreux avantages dès lors que la stabilité de pointage et la disponibilité sont des critères importants de performance, ce qui est le cas particulièrement pour les missions d'observation ; ces avantages sont explicités ci-après :

1 - le détecteur de polaire 3 permet un contrôle direct de l'angle de lacet, donc un temps de récupération minimum à l'issue d'une manoeuvre de contrôle d'orbite (contrairement au satellite américain GOES-I par exemple, pour lequel le lacet est contrôlé indirectement via le senseur de roulis, - il est rappelé qu'un écart en roulis devient un écart en lacet et réciproquement tous les quarts d'orbite - ce qui occasionne en pratique des transitoires d'environ neuf heures entre la fin d'une manoeuvre de contrôle d'orbite- par des tuyères - et le retour aux performances nominales d'imagerie en mode normal) ;

2 - en outre, ce détecteur 3 de l'étoile polaire est en pratique une barrette CCD, ce qui permet, malgré la faible luminosité de l'étoile polaire (magnitude 2.3), d'avoir une fréquence de mesure importante, de l'ordre de 10 Hz, ainsi qu'un bruit de mesure d'environ moitié de celui du détecteur terrestre 4 ; ces deux éléments 3 et 4 combinés permettent de se passer de gyromètres en mode normal (contrairement à la plate-forme OLYMPUS par exemple qui est stabilisée grâce à une combinaison de roues à réaction et de gyromètres), mais éventuellement aussi en mode contrôle d'orbite ; les gyromètres ne sont alors plus utilisés qu'en phase de mise à poste et éventuellement en cas de panne ;

3 - la configuration des roues à réaction offre, par rapport au système dit à moment cinétique embarqué (type GOES-I) les avantages suivants : capacité de couple sur les trois axes, ce qui permet une compensation a priori des perturbations déterministes (retour à zéro de miroirs de balayage, calibrations d'instruments ...) ; de faibles vitesses de rotation (moins de 1000 t/min contre typiquement 5000 à 6000 t/min) ce qui évite les problèmes de résonance structurelle (avec le mécanisme du senseur terrestre par exemple) ; et, il s'agit là d'un avantage appréciable de l'invention, la possibilité d'effectuer un retournement saisonnier rapide et à moindre consommation (cette manoeuvre permet de minimiser les entrées solaires sur les instruments optiques dans le cas d'un satellite d'observation) ;

4 - si la stabilité de la plate-forme aux fréquences élevées est un point clé, on utilisera préférentiellement des roues à réaction du type à paliers magnétiques, pour lesquelles le frottement est faible, et le balourd compensable électroniquement ;

5 - les bobines magnétiques permettent une compensation continue des couples perturbateurs externes en roulis et lacet ; si le couple perturbateur en tangage est suffisamment faible, il peut être accumulé dans la roue de tangage, celle-ci n'étant désaturée qu'au cours des manoeuvres de contrôle d'orbite ; alors, les tuyères ne sont pas utilisées pendant le mode normal (c'est-à-dire la plupart du temps), ce qui élimine les perturbations associées ainsi que certains risques de panne. Il est à noter qu'en cas d'orage magnétique, la durée de celui-ci reste en pratique suffisamment faible pour que les roues à réaction soient capables d'encaisser à la fois le couple perturbateur et le couple de contrôle erroné délivré par les bobines, avant que les performances de pointage et stabilité soient significativement affectées.

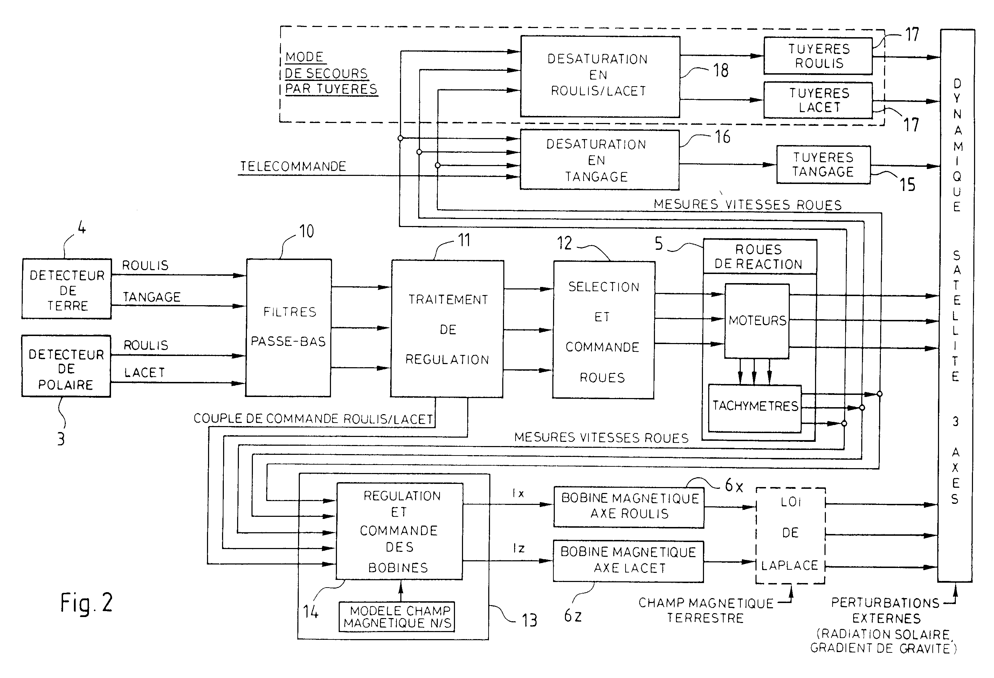

Les interconnexions entre les divers éléments de contrôle d'attitude précités, y compris les tuyères (non représentées à la figure 1) en principe destinées aux manoeuvres de contrôle d'orbite, sont explicitées à la figure 2.

Les signaux de mesure d'attitude selon les trois axes sont, au travers d'un circuit de filtrage 10 principalement constitué d'un filtre passe-bas, appliqués à un circuit de traitement et de régulation 11, de préférence du type "proportionnel-intégral", adapté selon un algorithme à la portée de l'homme de métier, à élaborer des signaux de contrôle d'attitude sous la forme de signaux de commande destinés aux roues à réaction pour générer les couples de correction nécessaires. Ces signaux de commande sont appliqués à un circuit 12 de sélection et d'entraînement des roues à réaction qui génère des signaux de puissance destinés aux moteurs de ces roues, notées 5 dans leur ensemble.

A ces roues de réaction sont associés des tachymètres délivrant des signaux de vitesse appliqués à la fois à un étage de désaturation (haut du schéma) et à un étage 13 de contrôle des bobines magnétiques 6X et 6Z (bas du schéma).

Cet étage de contrôle comporte un circuit de régulation des bobines 14 qui, à partir des signaux de vitesse fournis par les tachymètres et de signaux venant du circuit 11, représentatifs des couples commandés aux roues, déduit à partir d'un modèle du champ magnétique terrestre NORD-SUD des courants I à faire circuler dans les bobines magnétiques 6X et 6Z. Ces courants génèrent, par interaction selon la loi de LAPLACE (bloc en traits mixtes) avec le champ magnétique terrestre, des forces appliquées au satellite.

L'étage de désaturation comporte principalement des tuyères en tangage 15 commandées notamment par un circuit de désaturation en tangage 16 qui reçoit les signaux de vitesse provenant des tachymètres ainsi que d'éventuels signaux spécifiques de désaturation. Bien entendu, ces tuyères sont par ailleurs commandées par le circuit de contrôle d'orbite (non représenté) de tout type connu.

En pratique, les bobines magnétiques 6X et 6Z suffisent pour désaturer les roues en roulis et en lacet. Dans le cas contraire (mode de secours) les signaux de vitesse en roulis et en lacet déclenchent, au delà de seuils prédéterminés, la mise en oeuvre des tuyères de roulis et de lacet 17 au travers du circuit de désaturation en roulis/lacet associé repéré 18.

A la droite du schéma de la figure 2 apparaît un cadre en tireté schématisant le "comportement dynamique du satellite" sous l'action des divers efforts appliqués par les tuyères, par les roues, par les bobines en interaction avec le champ magnétique terrestre ou par la pression de radiation solaire.

En fait, on peut analyser le diagramme de la figure 2 en une boucle de contrôle primaire faisant intervenir les détecteurs d'attitude et les seules roues et une boucle de contrôle secondaire, plus lente, complétant l'action des roues à réaction 5 par celle des bobines magnétiques 6.

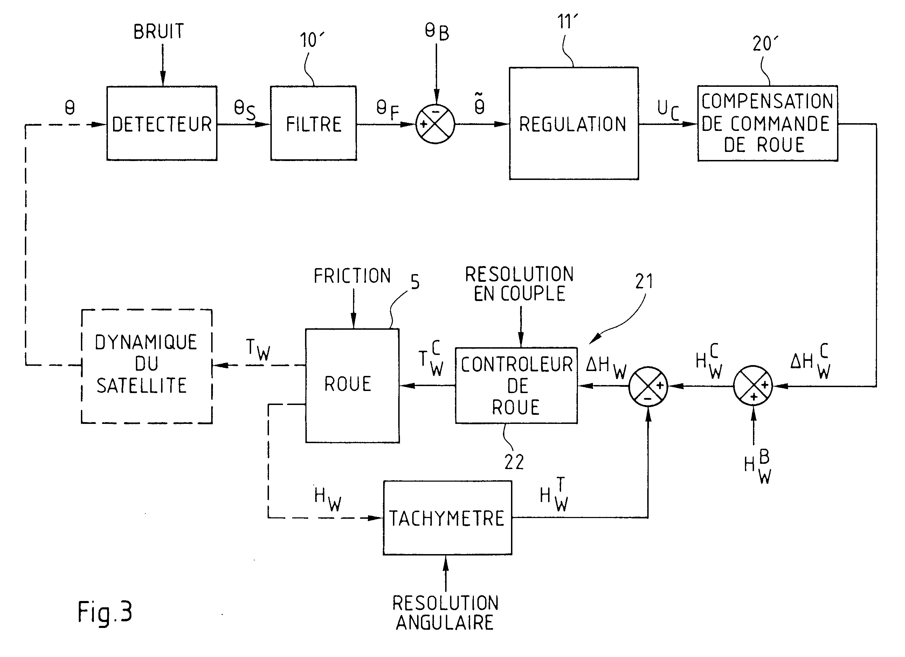

En fait, la boucle de contrôle primaire peut se représenter, pour chaque axe, par le schéma de la figure 3 où $\Theta$ correspond à l'attitude du satellite autour de l'axe considéré.

La valeur $\Theta_S$ de cette attitude mesurée par le détecteur 3 ou 4 est, après filtrage - grandeur $\Theta_F$ - par le circuit 10' (une partie du circuit 10 de la figure 2) comparée à une valeur angulaire consigne $\Theta_B$. Le signal d'écart $\widetilde{\Theta}$ est appliqué à un circuit régulateur 11' de type proportionnel-intégral (une partie du circuit 11) qui déduit un signal de commande de correction $U_c$. Un circuit 20' de compensation de commande de roue en déduit une variation de moment cinétique $\Delta H_w^C$ que l'on rajoute à une consigne $H_w^B$ convenablement choisie, pour obtenir une valeur de consigne $H_w^C$ appliquée a une

boucle rapide d'asservissement de la roue, notée 21 dans son ensemble et qui comporte un circuit de contrôle de roue 22 qui, compte tenu de la résolution en couple, applique à la roue 5 un signal de commande $T_w^C$. Compte tenu du comportement dynamique de la roue, un couple $T_w$ est appliqué au satellite, tandis que le tachymètre relève une mesure de moment cinétique $H_w^T$.

Les circuits 20 et 22 font partie du circuit 12 de la figure 2.

Il s'agit d'une architecture classique en soi qui comporte une boucle rapide d'asservissement propre à la roue, et un étage plus lent de commande de la roue. Les gains de commande sont (c'est à la portée de l'homme de métier) optimisés en fonction de la mission (par exemple les gains seront faibles lorsque le critère de performance choisi sera la stabilité de la plate-forme).

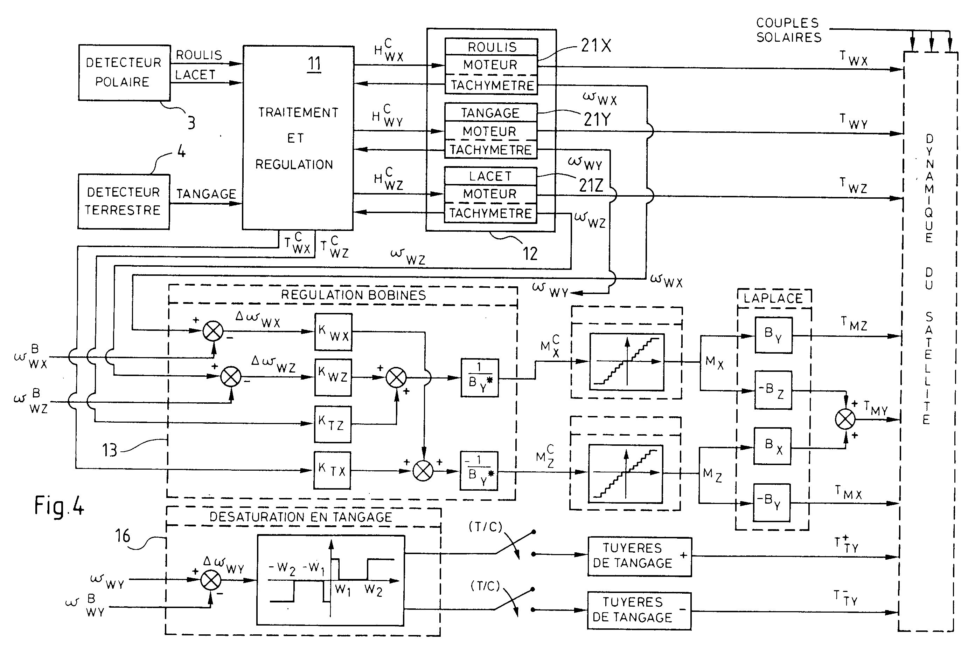

La figure 4 reprend le schéma de la figure 2, en détaillant la structure de la boucle secondaire.

On retrouve les détecteurs 3 ou 4, le circuit de traitement et de régulation 11, et le circuit 12 comportant une boucle 21 pour chacun des axes recevant des signaux $H_w^C$ pour chacun des axes. Il en résulte pour le satellite des couples $T_w$ autour de chacun des axes.

L'étage 13 de contrôle des bobines reçoit les signaux de vitesse $\omega_w$ associés aux roues en roulis et lacet, les signaux $T_w^C$ représentatifs des couples à appliquer au satellite, et d'éventuels signaux de consigne de vitesse $\omega_w^B$.

L'écart de vitesse en roulis $\Delta\omega_{wx}$, auquel on applique un gain $K_{wx}$ est ajouté au couple commandé en roulis auquel on a appliqué un gain $K_{TX}$. On "divise" le résultat de cette sommation par la composante $\dot{B}_y$ du champ magnétique calculée d'après le modèle adopté.

On procède de même pour le lacet.

Les signaux de commande $M^c$ ainsi élaborés sont appliqués aux bobines lesquelles, par interaction avec les composantes réelles du champ magnétique terrestre, appliquent au satellite des couples $T_M$ d'origine magnétique autour des trois axes.

Pour le tangage, on compare la vitesse $\omega_{wy}$ (ou son écart à une valeur de consigne $\omega B_{wy}$) à des seuils - $\omega_2$, -$\omega_1$, $\omega_1$, $\omega_2$ et, selon le sens de l'écart constaté, on met en oeuvre des tuyères agissant dans l'un ou l'autre sens autour de l'axe de tangage pour appliquer au satellite des couples $T_T$ appropriés.

On appréciera que les bobines magnétiques sont alimentées en continu par des courants qui sont fonction des vitesses des roues ; ces dernières jouent ainsi un rôle de détection des couples perturbateurs.

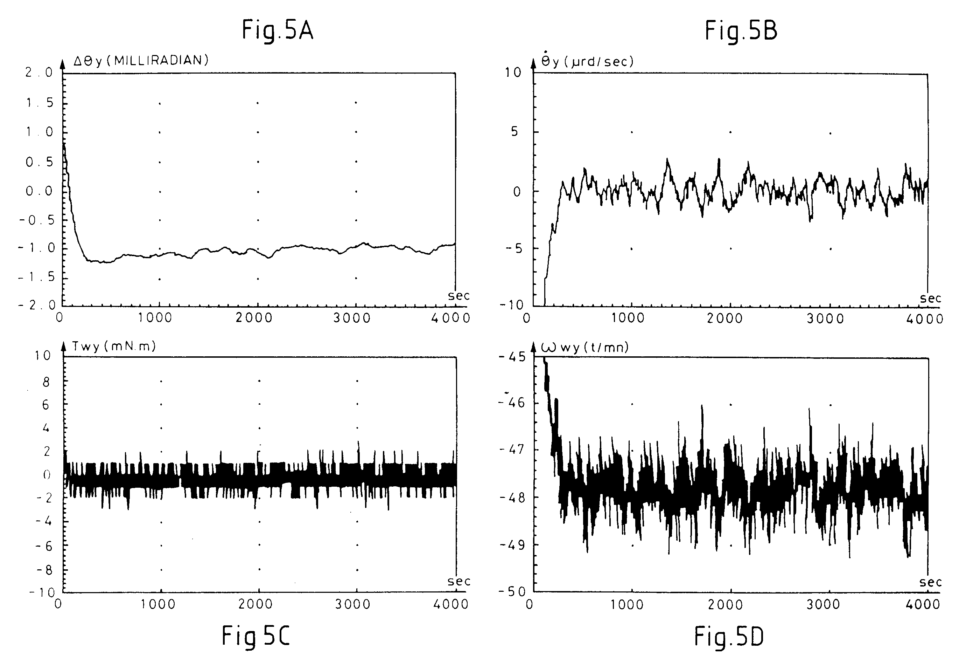

A titre d'exemple, les figures 5A à 5D présentent les résultats d'une simulation de la boucle primaire de contrôle d'attitude proposée par l'invention, à propos du tangage, avec une loi de contrôle, pour la roue en tangage, du type proportionnel-intégral à bas niveau de bruit (en anglais "low-jitter proportional-integral wheel control law"), les gains ayant été optimisés de manière à minimiser les vibrations de la plate-forme (cas d'un satellite d'observation).

La figure 5A représente l'attitude en tangage au cours du temps : il est de l'ordre de -0,1 milliradian.

La figure 5B représente la vitesse en tangage.

La figure 5C représente l'évolution du couple de commande $T_{wy}$ appliqué à la roue, et la figure 5D est le signal de vitesse délivré par le tachymètre.

On peut noter la grande stabilité ainsi atteinte.

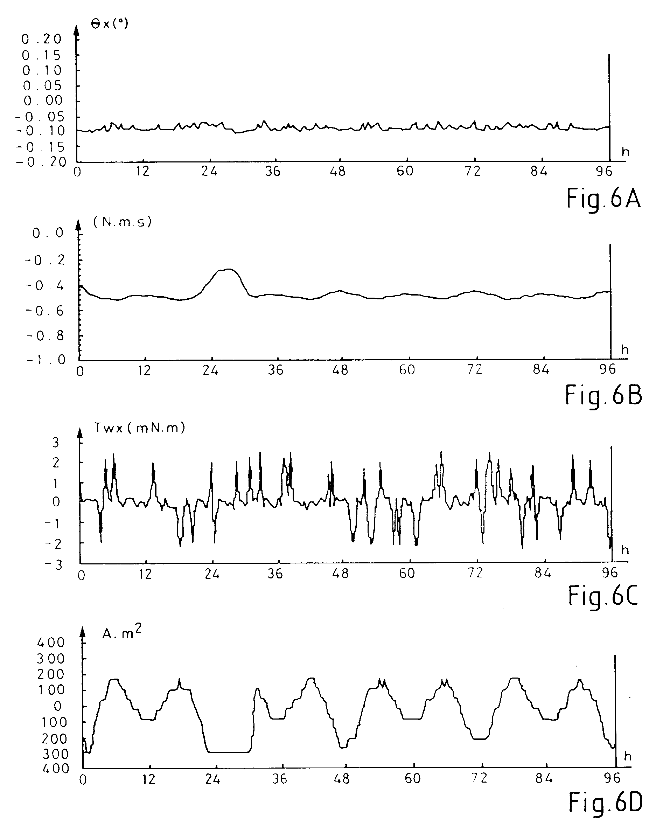

Les figures 6A à 6D représentent le résultat, du point de vue roulis, du contrôle d'attitude de l'invention au cours d'un orage magnétique (entre 24 et 36 heures) le satellite était en configuration nominale maximale NORD-SUD et une désaturation en tangage était assurée par tuyères.

La figure 6A représente l'évolution de l'angle en roulis $\Theta_x$.

La figure 6B représente l'évolution du moment de la roue en roulis.

La figure 6C représente l'évolution du couple appliqué à la roue en roulis.

La figure 6D correspond au diôle magnétique en lacet créé pour désaturer les roues en roulis/lacet.

On notera la grande stabilité à long terme en roulis malgré l'orage magnétique.

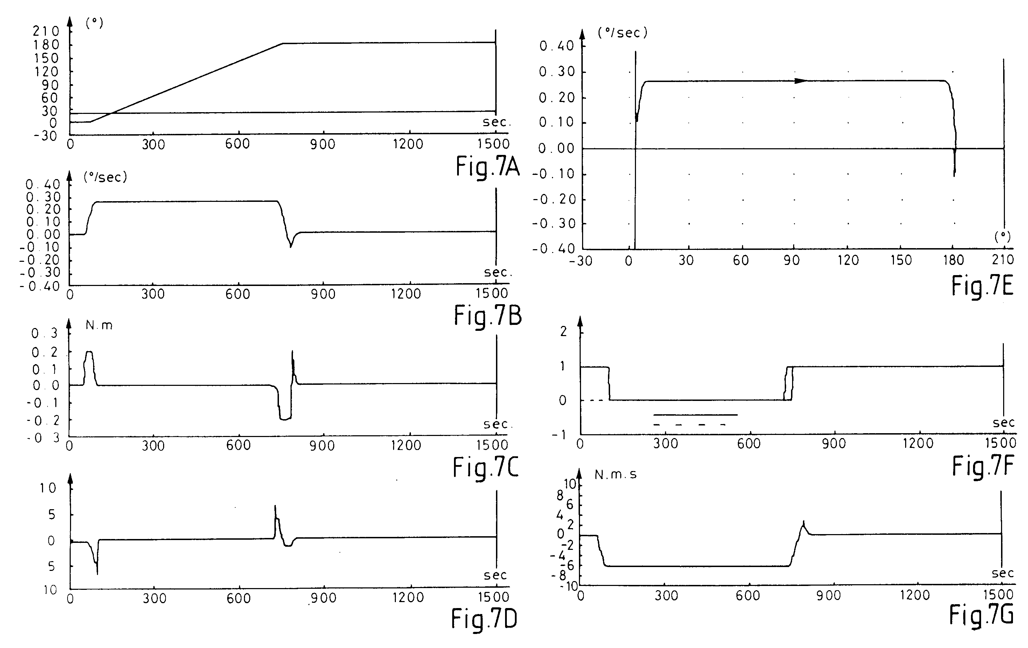

Les figures 7A à 7G représentent divers paramètres lors d'un retournement saisonnier NORD/SUD autour de l'axe de lacet, le satellite étant muni d'un détecteur d'Etoile polaire sur chaque face NORD et SUD, ainsi que d'un gyromètre. Le retournement a duré environ 700 sec.

La figure 7A représente, en trait plein, l'évolution de l'angle en lacet mesurée par le gyromètre intégrateur, aussi bien dans la phase de retournement (appelé en anglais "180 deg slew") qu'en phase de pointage fin vers la Terre.

La figure 7B représente la vitesse en lacet mesurée par gyromètre.

La figure 7C représente le couple de la roue en lacet.

La figure 7D représente l'angle de lacet mesuré par le détecteur de polaire.

La figure 7E représente la corrélation entre l'angle et la vitesse angulaire de lacet (vue dans le plan de phase).

La figure 7F représente en traits pleins le signal de visibilité d'Etoile Polaire et en tiretés le signal indicateur du fait que la sortie lacet de ce détecteur est utilisée dans la loi de contrôle de la roue, le niveau 1 correspondant à OUI et le niveau 0 à NON.

La figure 7G représente l'évolution au cours de ce retournement du moment angulaire de la roue en lacet.

On appréciera la rapidité du retournement et la faible durée du régime transitoire qui s'ensuit.

Il va de soi que la description qui précède n'a été proposée qu'à titre d'exemple non limitatif et que de nombreuses variantes peuvent être proposées par l'homme de l'art sans sortir du cadre de l'invention définie par les revendications qui suivent.

**Revendications**

1. Dispositif de contrôle d'attitude d'un satellite stabilisé selon trois axes sur une orbite terrestre, comportant :
   - un ensemble de détection d'attitude (3, 4) adapté à délivrer des signaux d'attitude en roulis, en lacet et en tangage,
   - un jeu (5) d'au moins trois roues à réaction d'axes non parallèles,
   - un jeu d'au moins deux bobines magnétiques (6X, 6Z) orientées au moins approximativement selon deux directions non parallèles du plan roulis/lacet,
   - une boucle de contrôle primaire comportant un circuit de traitement et de régulation (11) connecté entre l'ensemble de détection d'attitude et le jeu (5) d'au moins trois roues à réaction et adapté à déterminer à partir des signaux d'attitude et de consignes d'attitude, des signaux de correction d'attitude destinés aux roues pour appliquer au satellite des couples primaires de correction d'attitude,
   - une bouche de contrôle secondaire comportant un circuit (13) de régulation de bobines connecté entre le circuit de traitement et de régulation (11), le jeu (5) d'au moins trois roues à réaction et le jeu d'au moins deux bobines magnétiques, et adapté à déterminer à partir des signaux de correction d'attitude destinés aux roues, et de signaux représentatifs du comportement des roues, des signaux de compensation destinés à être appliqués aux bobines magnétiques pour, par interaction avec le champ magnétique terrestre, appliquer au satellite des couples secondaires de correction d'attitude, et de désaturation des roues,
   - un actionneur en tangage,
   - un circuit (16) de désaturation en tangage du jeu d'au moins trois roues connecté entre ce jeu (5) d'au moins trois roues à réaction et cet actionneur en tangage.

**2.** Dispositif selon la revendication 1, caractérisé en ce que les signaux représentatifs du comportement des roues sont des signaux de vitesse délivrés par des tachymètres associés à chacune des roues.

**3.** Dispositif selon la revendication 1 ou la revendication 2, caractérisé en ce que l'ensemble de détection d'attitude comporte un détecteur terrestre (4) et un détecteur d'Etoile polaire (3).

**4.** Dispositif selon l'une quelconque des revendications 1 à 3, caractérisé en ce que le jeu (5) d'au moins trois roues à réaction comporte une roue à réaction alignée suivant l'axe de tangage et deux roues d'axes parallèles au plan roulis/lacet.

**5.** Dispositif selon la revendication 4, caractérisé en ce que les deux roues d'axes parallèles au plan roulis/lacet sont respectivement alignées selon les axes de roulis et de lacet.

**6.** Dispositif selon l'une quelconque des revendications 1 à 5, caractérisé en ce que le jeu d'au moins trois roues à réaction comporte au moins une quatrième roue.

**7.** Dispositif selon la revendication 6, caractérisé en ce que la quatrième roue est alignée selon la bissectrice du trièdre formé par les axes des trois autres roues à réaction.

**8.** Dispositif selon l'une quelconque des revendications 1 à 7, caractérisé en ce que les deux bobines magnétiques sont orientées respectivement selon les axes de roulis et de lacet.

**9.** Dispositif selon l'une quelconque des revendications 1 à 8, caractérisé en ce que le circuit de traitement et de régulation est du type proportionnel-intégral.

**10.** Dispositif selon l'une quelconque des revendications 1 à 9, caractérisé en ce que la boucle de contrôle primaire se décompose en trois circuits de contrôle respectivement spécifique de chacune desdites trois roues à réaction.

**11.** Dispositif selon l'une quelconque des revendications 1 à 10, caractérisé en ce que la boucle de contrôle secondaire reçoit des signaux de consigne de comportement de roues et est adaptée à appliquer aux bobines des signaux propres à générer des couples secondaires de correction d'attitude tout en maintenant le comportement des roues à l'intérieur d'une plage prédéterminée autour desdits signaux de consigne.

**12.** Dispositif selon l'une quelconque des revendications 1 à 11, caractérisé en ce que le circuit de désaturation en tangage reçoit des signaux de consigne de comportement en provenance des roues agissant en tangage et est adapté à appliquer à l'actionneur en tangage, tel que tuyères, des signaux propres à générer des couples secondaires de désaturation de ces roues agissant en tangage, en sorte de maintenir la composante tangage du moment cinétique de l'ensemble des roues à réaction au moins approximativement égale à la consigne instantanée en tangage.

**Claims**

**1.** Attitude control device for a three-axis stabilised satellite in terrestrial orbit comprising:
- an attitude sensing system (3, 4) adapted to deliver roll, yaw and pitch attitude signals,
- a set (5) of at least three non-parallel axis momentum wheels,
- a set of at least two magnetic coils (6X, 6Z) oriented at least approximately in two non-parallel directions in the roll/yaw plane,
- a primary control loop comprising a processor and controller (11) connected between the attitude sensing system and the set (5) of at least three momentum wheels and adapted to determine from attitude signals and attitude set point signals attitude correction signals for the momentum wheels so as to apply to the satellite primary attitude correction torques,
- a secondary control loop comprising a coil controller (13) connected between the processor and controller (11), the set (5) of at least three momentum wheels and the set of at least two magnetic coils and adapted to determine from attitude correction signals addressed to the momentum wheels and from signals representative of the behaviour of the wheels compensation signals to be applied to the magnetic coils so that by interaction with the terrestrial magnetic field secondary attitude correction torques and wheel desaturation torques are applied to the satellite,
- a pitch actuator,

- a circuit (16) for desaturation in pitch of the set of at least three momentum wheels connected between said set (5) of at least three momentum wheels and said pitch actuator.

2. Device according to claim 1 characterised in that the signals representative of the behaviour of the momentum wheels are speed signals delivered by tachometers associated with each momentum wheel.

3. Device according to claim 1 or claim 2 characterised in that the attitude sensing system includes a terrestrial sensor (4) and a Pole Star sensor (3).

4. Device according to any one of claims 1 to 3 characterised in that the set (5) of at least three momentum wheels includes a momentum wheel aligned on the pitch axis and two momentum wheels with axes parallel to the roll/yaw plane.

5. Device according to claim 4 characterised in that the two momentum wheels with axes parallel to the roll/yaw plane are respectively aligned on the roll and yaw axes.

6. Device according to any one of claims 1 to 5 characterised in that the set of at least three momentum wheels includes at least a fourth wheel.

7. Device according to claim 6 characterised in that the fourth wheel is aligned on the bisector of the trihedron formed by the axes of the other three momentum wheels.

8. Device according to any one of claims 1 to 7 characterised in that the two magnetic coils are oriented respectively on the roll and yaw axes.

9. Device according to any one of claims 1 to 8 characterised in that the processor and controller is of the proportional-integral type.

10. Device according to any one of claims 1 to 9 characterised in that the primary loop comprises three control circuits specific to respective momentum wheels.

11. Device according to any one of claims 1 to 10 characterised in that the secondary control loop receives momentum wheel behaviour set point signals and is adapted to apply to the coils signals adapted to generate secondary attitude correction torques whilst maintaining the behaviour of the momentum wheels within a predetermined range about said set point signals.

12. Device according to any one of claims 1 to 11 characterised in that the pitch desaturation circuit receives behaviour set point signals from pitch momentum wheels and is adapted to apply to the pitch actuator (e.g. thrusters) signals adapted to generate secondary torques for desaturating the pitch momentum wheels in order to maintain the pitch component of the kinetic moment of all the momentum wheels at least approximately equal to the instantaneous pitch set point.

**Patentansprüche**

1. Vorrichtung zur Steuerung der Lage eines dreiachsenstabilisierten Satelliten auf einem Erdorbit, umfassend:
   - eine Lageerfassungseinheit (3, 4), die so ausgelegt ist, daß sie Lagesignale bezüglich Rollen, Gieren und Nicken liefern kann,
   - einen Satz (5) von wenigstens drei Reaktionsrädern mit nicht parallelen Achsen,
   - einen Satz von wenigstens zwei Magnetspulen (6X, 6Z), die wenigstens annähernd in zwei nicht parallelen Richtungen der Roll/Gierebene gerichtet sind,
   - eine Primärsteuerschleife, umfassend eine Verarbeitungs- und Regelschaltung (11), die zwischen die Lageerfassungseinheit und den Satz (5) von wenigstens drei Reaktionsrädern geschaltet ist und so ausgelegt ist, daß sie ausgehend von Lage- und Lagesollwert-Signalen Lagekorrektursignale bestimmen kann, die für die Räder bestimmt sind, um an den Satelliten primäre Momente zur Lagekorrektur anzulegen,
   - eine Sekundärsteuerschleife, umfassend eine Spulenregelschaltung (13), die zwischen die Verarbeitungs- und Regelschaltung (11), den Satz (5) von wenigstens drei Reaktionsrädern und den Satz von wenigstens zwei Magnetspulen geschaltet ist und so ausgelegt ist, daß sie ausgehend von den für die Räder bestimmten Lagekorrektursignalen und von das Verhalten der Räder darstellenden Signalen Ausgleichssignale bestimmen kann, die dazu bestimmt sind, an die Magnetspulen angelegt zu werden, um durch Wechselwirkung mit dem Erdmagnetfeld an den Satelliten sekundäre Momente zur Lagekorrektur und zur Entsättigung der Räder anzulegen,
- ein Nick-Betätigungsorgan,
- eine Schaltung (16) zur Nickentsättigung des Satzes von wenigstens drei Rädern, die zwischen diesen Satz (5) von wenigstens drei Reaktionsrädern und dieses Nickbetätigungsorgan geschaltet ist.

2. Vorrichtung nach Anspruch 1, dadurch gekennzeichnet, daß die das Verhalten der Räder darstellenden Signale Geschwindigkeitssignale sind, die von jedem der Räder zugeordneten Geschwindigkeitsmessern geliefert werden.

3. Vorrichtung nach Anspruch 1 oder Anspruch 2, dadurch gekennzeichnet, daß die Lageerfassungseinheit einen Erddetektor (4) und einen Polarsterndetektor (3) umfaßt.

4. Vorrichtung nach einem der Ansprüche 1 bis 3, dadurch gekennzeichnet, daß der Satz (5) von wenigstens drei Reaktionsrädern ein Reaktionsrad, das in der Nickachse ausgerichtet ist, und zwei Räder mit zur Roll/Gierebene parallelen Achsen besitzt.

5. Vorrichtung nach Anspruch 4, dadurch gekennzeichnet, daß die beiden Räder mit zur Roll/Gierebene parallelen Achsen in der Roll- bzw. in der Gierachse ausgerichtet sind.

6. Vorrichtung nach einem der Ansprüche 1 bis 5, dadurch gekennzeichnet, daß der Satz von wenigstens drei Reaktionsrädern wenigstens ein viertes Rad umfaßt.

7. Vorrichtung nach Anspruch 6, dadurch gekennzeichnet, daß das vierte Rad in der Winkelhalbierenden des von den Achsen der drei anderen Reaktionsräder gebildeten Trieders ausgerichtet ist.

8. Vorrichtung nach einem der Ansprüche 1 bis 7, dadurch gekennzeichnet, daß die beiden Magnetspulen in der Roll- bzw. in der Gierachse gerichtet sind.

9. Vorrichtung nach einem der Ansprüche 1 bis 8, dadurch gekennzeichnet, daß die Verarbeitungs- und Regelschaltung vom Proportional-Integral-Typ ist.

10. Vorrichtung nach einem der Ansprüche 1 bis 9, dadurch gekennzeichnet, daß die Primärsteuerschleife in drei Steuerschaltungen zerfällt, die jeweils für eine der drei Reaktionsräder spezifisch sind.

11. Vorrichtung nach einem der Ansprüche 1 bis 10, dadurch gekennzeichnet, daß die Sekundärsteuerschleife Sollwertsignale des Verhaltens der Räder empfängt und so ausgelegt ist, daß sie an die Spulen Signale anlegen kann, die dafür geeignet sind, sekundäre Lagekorrekturmomente zu erzeugen, wobei sie das Verhalten der Räder innerhalb eines vorbestimmten Bereichs um diese Sollwertsignale herum halten.

12. Vorrichtung nach einem der Ansprüche 1 bis 11, dadurch gekennzeichnet, daß die Nick-Entsättigungsschaltung Verhaltens-Sollwertsignale empfängt, die von den bzgl. Nicken wirkenden Rädern kommen, und so ausgelegt ist, daß sie an das Nick-Betätigungsorgan, wie Düsen, Signale anlegen kann, die dazu geeignet sind, sekundäre Momente zur Entsättigung dieser bzgl. Nicken wirkenden Räder zu erzeugen, so daß die Nickkomponente des kinetischen Moments der Gesamtheit der Reaktionsräder wenigstens annähernd gleich dem momentanen Nicksollwert gehalten wird.

Fig.1

POLAIRE

TERRE

EP 0 493 143 B1

Fig. 2

Fig.3

BRUIT

$\theta$ → DETECTEUR → $\theta_S$ → FILTRE `10'` → $\theta_F$ → ⊕ (with $\theta_B$) → $\tilde{\theta}$ → REGULATION `11'` → $U_C$ → COMPENSATION DE COMMANDE DE ROUE `20'`

FRICTION

RESOLUTION EN COUPLE

DYNAMIQUE DU SATELLITE ← $T_W$ ← ROUE `5` ← $T_W^C$ ← CONTROLEUR DE ROUE `22` ← $\Delta H_W$ `21` ← ⊕ ← $H_W^C$ ← ⊕ ← $\Delta H_W^C$

$H_W^B$

$H_W$ → TACHYMETRE → $H_W^T$

RESOLUTION ANGULAIRE

EP 0 493 143 B1

Fig.4

COUPLES SOLAIRES

DETECTEUR POLAIRE — 3

ROULIS
LACET

DETECTEUR TERRESTRE — 4

TANGAGE

11

TRAITEMENT ET REGULATION

$H^C_{WX}$

$H^C_{WY}$

$H^C_{WZ}$

$T^C_{WX}$ $T^C_{WZ}$

ROULIS MOTEUR — 21X
TACHYMETRE

TANGAGE MOTEUR — 21Y
TACHYMETRE

LACET MOTEUR — 21Z
TACHYMETRE

12

$\omega_{WX}$
$\omega_{WY}$
$\omega_{WZ}$
$\omega_{WZ}$

$T_{WX}$
$T_{WY}$
$T_{WZ}$

DYNAMIQUE DU SATELLITE

$\omega_{WY}$ $\omega_{WX}$

REGULATION BOBINES

$\Delta\omega_{WX}$ $K_{WX}$

$\Delta\omega_{WZ}$ $K_{WZ}$

$K_{TZ}$

$K_{TX}$

$\frac{1}{B_Y^*}$ $M^C_X$

$-\frac{1}{B_Y^*}$ $M^C_Z$

$M_X$

$M_Z$

LAPLACE

$B_Y$ $T_{MZ}$

$-B_Z$

$B_X$ $T_{MY}$

$-B_Y$ $T_{MX}$

$\omega^B_{WX}$

$\omega^B_{WZ}$

13

16

DESATURATION EN TANGAGE

$\omega_{WY}$

$\omega^B_{WY}$

$\Delta\omega_{WY}$

$-W_2$ $-W_1$ $W_1$ $W_2$

(T/C)

(T/C)

TUYERES DE TANGAGE +

TUYERES DE TANGAGE −

$T^+_{TY}$

$T^-_{TY}$

EP 0 493 143 B1

EP 0 493 143 B1

Fig.5A  Fig.5B  Fig.5C  Fig.5D

Fig.6A

Fig.6B

Fig.6C

Fig.6D

15

Fig.7A

Fig.7B

Fig.7C

Fig.7D

Fig.7E

Fig.7F

Fig.7G

EP 0 493 143 B1